# EUROPEAN PATENT SPECIFICATION

(11) **EP 3 313 113 B1**
(45) Date of publication and mention of the grant of the patent: **06.11.2019**
(21) Application number: 15909104.0
(22) Date of filing: 28.11.2015
(51) Int. Cl.: H04W 24/02, H04W 88/12, H04W 92/04

(54) **CONVERTING A MACRO BASE STATION IDENTITY INTO A SMALL CELL IDENTITY**
UMWANDLUNG EINER IDENTITÄT EINER MACRO-BASISSTATION IN EINE IDENTITÄT EINER KLEINEN ZELLE
CONVERSION DE L'IDENTITÉ D'UNE STATION DE BASE MACRO EN L'IDENTITÉ D'UNE PETITE CELLULE

(43) Date of publication of application: 25.04.2018
(73) Proprietor: Huawei Technologies Co., Ltd., Longgang District Shenzhen, Guangdong 518129 (CN)
(72) Inventor: ZENG, Lijun, Shenzhen Guangdong 518129 (CN)
(74) Representative: Gill Jennings & Every LLP
(86) International application number: PCT/CN2015/095881
(87) International publication number: WO 2017/088193

(56) References cited:
- CN-A- 103 826 319
- CN-A- 103 874 046
- CN-A- 104 618 931
- GB-A- 2 500 609
- US-A1- 2014 241 317
- US-A1- 2015 215 894
- ERICSSON: "S1-handover routing with HeNB Gateway", 3GPP DRAFT; R3-082219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080813, 13 August 2008 (2008-08-13), XP050165260, [retrieved on 2008-08-13]
- ERICSSON: "Changes to TS36.300 agreed in RAN3#61bis and RAN3#62", 3GPP DRAFT; R3-083577, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081125, 25 November 2008 (2008-11-25), XP050324756, [retrieved on 2008-11-25]
- Wong Marcus: "Security of femtocells" In: "Security and Communication Networks", 1 January 2014 (2014-01-01), XP055473353, ISSN: 1939-0114 vol. 9, pages 73-81,
- Dan Forsberg ET AL: "Security for Home Base Station Deployment" In: "LTE security", 17 October 2012 (2012-10-17), Wiley, Chichester, XP055574490, ISBN: 978-1-118-35558-9 pages 233-280, DOI: 10.1002/9781118380642.ch13,
- TATTAM TATTAM SOFTWARE ENTERPRISES PTY LTD P ET AL: "Stateless IPv6 delivery within IPv4 (V6 via V4); draft-v6-via-v4-00.txt", STATELESS IPV6 DELIVERY WITHIN IPV4 (V6 VIA V4); DRAFT-V6-VIA-V4-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 15 January 2012 (2012-01-15), pages 1-18, XP015080203, [retrieved on 2012-01-15]

## Description

### TECHNICAL FIELD

The present disclosure relates to the communications field, and in particular, to an S1 message transmission method and an intermediate device.

### BACKGROUND

As wireless communications technologies develop, a concept of a home base station gradually emerges. A home base station is a small and low-power base station, and is deployed in indoor premises such as a home or an office. The home base station is mainly used to provide users with a higher service rate and to reduce costs required for using a high rate service, and compensates for insufficient coverage of an existing distributed cellular wireless communications system.

A target protocol stipulates that each HeNB (Home evolved NodeB, home evolved NodeB, HeNB for short) supports only a single cell, and the cell is identified in the same way as an ordinary cell does. In addition, to rapidly distinguish device types, a HeNB has a base station identity different from that of a macro base station. The base station identity of the macro base station has a bit width of 20 bits, the base station identity of the HeNB has a bit width of 28 bits, and the bit width of the base station identity of the HeNB is the same as a bit width of a cell identity of a cell served by the HeNB. As LTE small cells are deployed on a large scale, currently, a quantity of operator's small cells has approached one million. 20-bit base station address space is no longer sufficient. To resolve the problem of insufficient base station address space, the 3GPP (the 3rd Generation Partnership Project, 3rd Generation Partnership Project, 3GPP for short) increases a bit width of a base station identity of a HeNB to 28 bits.

It can be learned from the foregoing that, the existing solution has the following problem: Both a core network device and a macro base station need to be correspondingly upgraded to support a 28-bit base station identity, and both a corresponding S1 interface and X2 interface need to be modified to support the 28-bit base station identity. This requires a relatively great change to the existing network, and leads to relatively high upgrade costs.

ERICSSON: "S1-handover routing with HeNB Gateway", 3GPP DRAFT; R3-082219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG3, no. Jeju Island; 20080813, 13 August 2008 discusses S1-handover routing with HeNB Gateway.

### SUMMARY

To resolve a technical problem, aspects of the present disclosure provide an S1 message transmission method and an intermediate device, so as to resolve a prior-art problem that high upgrade costs are caused when a base station identity of more than 20 bits needs to be supported.

Various aspects of the present disclosure have been defined in the independent claims. Further technical features of each of these aspects have been defined in the respective dependent claims.

Implementing the present disclosure brings the following beneficial effects:
The intermediate device is configured between the core network device and the small cell, and the intermediate device converts a base station identity in a transmitted S1 message, so that a base station identity obtained after conversion meets format requirements of the core network device and of the small cell. In this way, the core network device can support more base stations, and a problem of insufficient base station identity space is resolved; there is no need to change the core network device and the macro base station, and upgrade costs are reduced.

### BRIEF DESCRIPTION OF DRAWINGS

To describe the technical solutions in the aspects of the present disclosure or in the prior art more clearly, the following briefly describes the accompanying drawings required for describing the aspects. Apparently, the accompanying drawings in the following description show merely some aspects of the present disclosure, and a person of ordinary skill in the art may still derive other drawings from these accompanying drawings without creative efforts.
FIG. 1 is a network architecture diagram of a communications system according to an aspect of the present disclosure;
FIG. 2 is a schematic flowchart of an S1 message transmission method according to an aspect of the present disclosure;
FIG. 3 is another schematic flowchart of an S1 message transmission method according to an aspect of the present disclosure;
FIG. 4 is a schematic interaction diagram of an S1 message transmission method according to an aspect of the present disclosure;
FIG. 5 is another schematic interaction diagram of an S1 message transmission method according to an aspect of the present disclosure;
FIG. 6 is a schematic structural diagram 1 of an intermediate device according to an aspect of the present disclosure;
FIG. 7 is a schematic structural diagram 2 of an intermediate device according to an aspect of the present disclosure;
FIG. 8 is a schematic structural diagram 3 of an intermediate device according to an aspect of the present disclosure; and
FIG. 9 is a schematic structural diagram 4 of an intermediate device according to an aspect of the present disclosure.

### DESCRIPTION OF ASPECTS

The following clearly and completely describes the technical solutions in the aspects of the present disclosure with reference to the accompanying drawings in the aspects of the present disclosure. Apparently, the described aspects are merely some but not all of the aspects of the present disclosure. All other aspects obtained by a person of ordinary skill in the art based on the aspects of the present disclosure without creative efforts shall fall within the protection scope of the present disclosure.

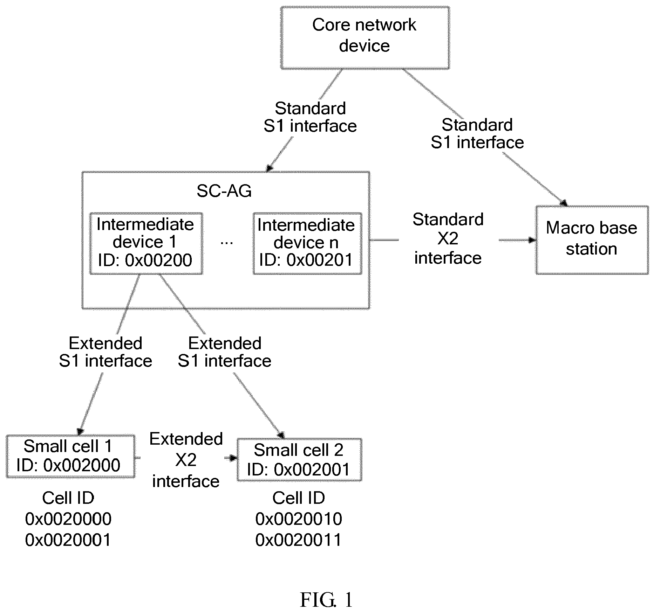

Referring to FIG. 1, FIG. 1 is a schematic structural diagram of a communications system according to an aspect of the present disclosure. A core network device manages a plurality of macro base stations and a plurality of intermediate devices. The core network device communicates with the intermediate device and with the macro base station by using a standard S1 interface. The core network device includes an MME (Mobility Management Entity, mobility management entity, MME for short) and an SGW (Serving GateWay, serving gateway, SGW for short). The MME communicates with the intermediate device and with the macro base station by using an S1-MME interface. The SGW communicates with the intermediate device and with the macro base station by using an S1-U interface. The S1-MME interface is configured to transmit control plane data. The S1-U interface is configured to transmit user plane data. Communication between neighboring macro base stations, between a macro base station and an intermediate device, and between intermediate devices is performed by using a standard X2 interface. In FIG. 1, that the macro base station and the intermediate device communicate with each other is used as an example. A small cell set may be configured for each intermediate device. The small cell set includes a plurality of small cells. No small cell is configured for the macro base station. A plurality of cells may be configured for a small cell in the small cell set. The intermediate device and each small cell in the small cell set managed by the intermediate device communicate with each other by using an extended S1 interface. Two neighboring small cells communicate with each other by using an extended X2 interface. The standard S1 interface mentioned above represents an S1 interface supporting a 20-bit base station identity. The extended S1 interface represents an S1 interface supporting a base station identity of more than 20 bits. The standard X2 interface represents an X2 interface supporting a 20-bit base station identity. The extended X2 interface represents an X2 interface supporting a base station identity of more than 20 bits. When the core network device communicates with the intermediate device, the intermediate device implements a function of the macro base station. When the intermediate device communicates with the small cell, the intermediate device implements a function of the core network device. The macro base station cannot perceive the existence of a small cell, but can only perceive the existence of an intermediate device. The macro base station may add an intermediate device as a neighboring base station manually or by using an ANR (Automatic Neighbour Relation, automatic neighbour relation, ANR for short).

It should be noted that each intermediate device may be implemented by using a separate physical host, or a plurality of virtual machines may run on one physical host to implement a plurality of intermediate devices. As shown in FIG. 1, a plurality of virtual machines implementing functions of intermediate devices run on a physical host SC-AG. The intermediate devices communicate with each other by using a virtual standard X2 interface. Virtual machine creation and configuration processes have been disclosed in the prior art, and details are not described herein.

An interaction procedure of the communications system in this aspect of the present disclosure includes an interaction procedure in a downstream direction and an interaction procedure in an upstream direction. An S1 message mentioned below represents a message transmitted by using an S1 interface (including a standard S1 interface and an extended S1 interface). An X2 message represents a message transmitted by using an X2 interface (including a standard X2 interface and an extended X2 interface). The interaction procedure in a downstream direction is as follows:
For example, a first S1 message is from a core network device. The core network device sends, to an intermediate device, a first S1 message including a macro base station identity and a cell global identity. The macro base station identity is an identity of the intermediate device. A bit width of the macro base station identity is less than or equal to 20 bits. The cell global identity is used to uniquely represent, within a global scope, an identity of a cell configured for a small cell. A bit width of the cell global identity is greater than 20 bits and is usually 28 bits. It should be noted that, in addition to the cell global identity, the cell configured for the small cell may be identified by a cell ID, a PID (Physical Cell Identifier, physical cell identifier, PID for short), or a UE S1AP ID. The intermediate device receives the first S1 message sent by the core network device. The intermediate device determines whether the first S1 message needs to be sent to a small cell in a small cell set managed by the intermediate device. If yes, the intermediate device obtains, according to a preset mapping relationship, a small cell identity corresponding to the cell global identity. The mapping relationship may be maintained on the intermediate device or may be maintained on another device. The intermediate device converts the macro base station identity in the first S1 message to the obtained small cell identity, and after the conversion, generates a second S1 message including the small cell identity. The intermediate device sends the generated second S1 message to a small cell corresponding to the small cell identity, where the small cell is in the small cell set managed by the intermediate device. The first small cell receives a message type of the second S1 message, and completes a corresponding signaling procedure.

The interaction procedure in an upstream direction is as follows: For example, an intermediate device obtains a first S1 message from a small cell set managed by the intermediate device. A small cell in the small cell set managed by the intermediate device generates a first S1 message including a small cell identity. The small cell identity is an identity of the small cell. A bit width of the small cell identity is greater than 20 bits. The small cell sends the first S1 message to the intermediate device associated with the small cell. The intermediate device receives the first S 1 message sent by the small cell in the small cell set managed by the intermediate device. The intermediate device determines whether the first S1 message needs to be sent to a core network device. If the first S1 message needs to be sent to the core network device, the intermediate device obtains a macro base station identity. The macro base station identity is an identity of the intermediate device. A macro base station converts the small cell identity to the macro base station identity, and after performing the conversion operation, generates a second S1 message including the macro base station identity. The intermediate device sends the second S1 message to the core network device associated with the intermediate device. The core network device completes a corresponding signaling procedure according to a message type of the second S1 message. It should be noted that, each small cell is associated with only one intermediate device, and each intermediate device is associated with only one core network device.

In the aspects of the present disclosure, an intermediate device is configured between a core network device and a small cell, and the intermediate device converts a base station identity in a transmitted S1 message, so that a base station identity obtained after conversion meets format requirements of the core network device and of the small cell. In this way, the core network device can support more base stations, and a problem of insufficient base station identity space is resolved; there is no need to change the core network device and a macro base station, and upgrade costs are reduced.

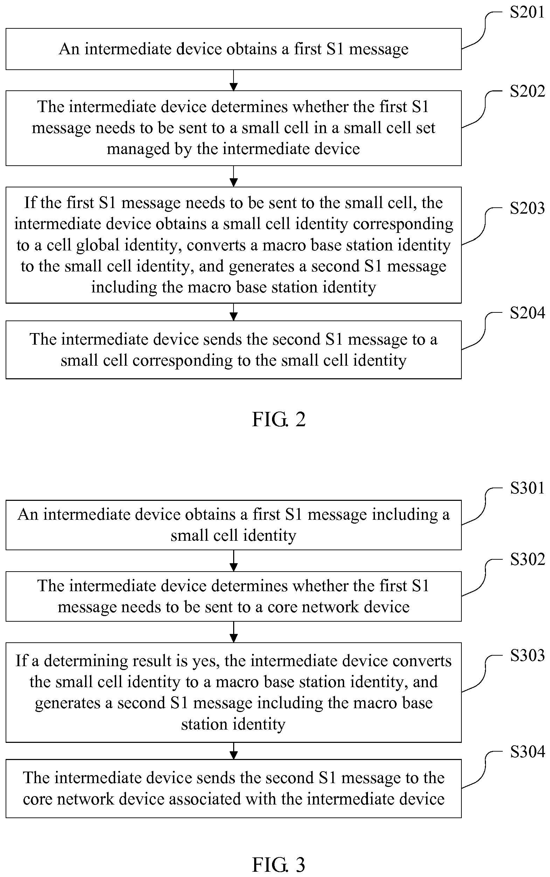

Referring to FIG. 2, FIG. 2 is a schematic flowchart of an S1 message transmission method according to an aspect of the present disclosure. In this aspect of the present disclosure, the method includes the following steps.

5201. An intermediate device obtains a first S1 message.

Specifically, a method for obtaining the first S1 message by the intermediate device may be: obtaining a generated first S1 message from the intermediate device, or receiving a first S1 message sent by a core network device, or receiving a first S1 message sent by another network device. The first S1 message includes a macro base station identity and a cell global identity. The macro base station identity is an identity of the intermediate device. A bit width of the macro base station identity is less than or equal to 20 bits. The cell global identity represents an identity of a cell configured for a small cell. The identity of the cell is unique within a global scope.

S202. The intermediate device determines whether the first S1 message needs to be sent to a small cell in a small cell set managed by the intermediate device.

Specifically, the intermediate device manages a small cell set, and the small cell set includes a plurality of small cells. A method for determining, by the intermediate device, whether the first S1 message needs to be sent to a small cell in the small cell set managed by the intermediate device is: determining, according to a message type of the first S1 message and a destination network device, whether the first S1 message needs to be sent to the small cell in the small cell set managed by the intermediate device. For example, the first S1 message relates to a configuration process of the small cell in the small cell set managed by the intermediate device or to a configuration of user equipment in a cell belonging to the small cell, and the first S1 message needs to be sent to the small cell in the small cell set managed by the intermediate device. If the first S1 message relates to only a configuration process of the intermediate device (a macro base station), there is no need to send the first S1 message to the small cell in the small cell set.

S203. If the first S1 message needs to be sent to the small cell, the intermediate device obtains a small cell identity corresponding to a cell global identity, converts a macro base station identity to the small cell identity, and generates a second S1 message including the macro base station identity.

Specifically, the cell global identity is used to uniquely represent an identity of a cell configured for a small cell. If the intermediate device determines that the first S1 message needs to be sent to the small cell, the intermediate device obtains, according to a preset mapping relationship between a small cell identity and a cell global identity, the small cell identity corresponding to the cell global identity. The mapping relationship may be maintained on the intermediate device or may be maintained on another network device. A plurality of cells may be configured for the small cell, that is, one small cell identity is associated with a plurality of global cell identities. A bit width of the small cell identity is greater than 20 bits. After converting the macro base station identity in the first S1 message to the small cell identity, the intermediate device generates the second S1 message. The second S1 message includes the small cell identity.

S204. The intermediate device sends the second S1 message to a small cell corresponding to the small cell identity.

Specifically, the intermediate device sends the second S1 message to the small cell corresponding to the small cell identity, where the small cell is in the small cell set managed by the intermediate device. The first small cell receives the second S1 message, and completes a corresponding signaling procedure according to a message type of the second S 1 message.

During implementation of this aspect of the present disclosure, the intermediate device converts, to the small cell identity, the macro base station identity included in the S1 message transmitted in a downstream direction, so that the S1 message obtained after the conversion is performed meets a format requirement of the small cell. In this way, there is no need to change an existing macro base station, and upgrade costs are reduced.

The converting a macro base station identity to the small cell identity includes:
converting the macro base station identity to the small cell identity by extending a custom field.

Specifically, the bit width of the macro base station identity is less than the bit width of the small cell identity. The intermediate device may obtain the bit width of the small cell identity by extending the custom field for the macro base station identity. For example, the bit width of the small cell identity is 28 bits, and the bit width of the macro base station identity is 20 bits. The intermediate device may extend the 20-bit macro base station identity by an 8-bit custom field, so that the bit width of the existing macro base station identity changes to 28 bits, and the extended macro base station identity is converted to the found small cell identity.

The converting a macro base station identity to the small cell identity includes:
converting the macro base station identity to the small cell identity according to a field of the macro base station identity and an idle field of an identity other than the macro base station identity.

Specifically, the bit width of the macro base station identity is less than the bit width of the small cell identity. In addition to the macro base station identity and the cell global identity, the first S1 message may include another identity, for example, a UE S1AP ID or a PID. An idle field in the another identity is used as a difference between the bit width of the macro base station identity and the bit width of the small cell identity. For example, the macro base station identity has a bit width of 20 bits, and the small cell identity has a bit width of 28 bits. A bit width of another identity PID carried in the first S1 message is 18 bits, but in the PID, only 10 bits are used and there is an 8-bit idle field. The intermediate device extends the existing 20-bits macro base station identity to an identity of 28 bits according to the idle 8 bits in the PID, and converts the extended macro base station identity to the small cell identity. It should be noted that, the intermediate device is not limited to extending the bit width of the macro base station identity by using an idle field of one identifier, but may extend the macro base station identity by using an idle field of a plurality of other identifiers. This is not limited in the present disclosure.

Optionally, the obtaining, by an intermediate device, a first S1 message includes:
receiving, by the intermediate device, a first S1 message sent by a core network device.

Optionally, the determining, by the intermediate device, whether the first S1 message needs to be sent to a small cell in a small cell set managed by the intermediate device includes:
identifying a message type of the first S1 message;
when the message type of the first S 1 message includes any one of a paging paging message, an evolved radio access bearer setup request E-RAB setup request message, or an initial context setup request initial context setup request message, determining, by the intermediate device, whether user equipment UE corresponding to the first S1 message is located in a cell belonging to the small cell set; and
if yes, determining, by the intermediate device, that the first S1 message needs to be sent to the small cell in the small cell set.

The first S1 message includes any one of a paging paging message, an evolved radio access bearer setup request E-RAB setup request message, or an initial context setup request initial context setup request message. The paging message is used to page UE in a cell belonging to a small cell. The E-RAB setup request message is used to set up a radio bearer between UE and a small cell serving the UE. The initial context setup request message is used to set up an initial context of UE in a cell belonging to a small cell. The intermediate device receives the first S1 message, including the macro base station identity and the cell global identity, that is sent by the core network device, and determines whether the UE corresponding to the first S1 message is located in the cell managed by the small cell set, where the small cell set is managed by the intermediate device. A determining method may be as follows: When the UE is handed over between small cells in the small cell set, the intermediate device records a cell global identity of a cell in which the UE is located most recently or a small cell identity obtained most recently; after receiving the first S 1 message, the intermediate device compares the cell global identity in the first S1 message and the recorded cell global identity, to determine whether the UE is located in the cell belonging to the small cell set. If the UE is located in the cell belonging to the small cell set, the intermediate device needs to send the first S1 message to the small cell; otherwise, the intermediate device does not need to send the first S1 message to the small cell.

Optionally, the determining, by the intermediate device, whether the first S1 message needs to be sent to a small cell in a small cell set managed by the intermediate device includes:
querying, by the intermediate device according to a preset mapping relationship, a small cell identity associated with the cell global identity; if the small cell identity is found, determining that the first S1 message needs to be sent to the small cell in the small cell set; or
if the small cell identity is not found, determining that the first S1 message does not need to be sent to the small cell in the small cell set.

Specifically, the intermediate device shields a small cell managed by the intermediate device from the core network device, and the core network device does not know the existence of the small cell. A mapping relationship between a small cell identity and a cell global identity is preconfigured on the intermediate device. The intermediate device receives the first S1 message, including the cell global identity and the macro base station identity, that is sent by the core network device. The intermediate device queries, according to the mapping relationship, whether there is a small cell identity corresponding to the cell global identity. If there is a small cell identity, it indicates that a cell corresponding to the cell global identity is managed by the small cell, and therefore, the first S1 message needs to be sent to the small cell. Otherwise, the intermediate device directly processes the first S1 message.

Optionally, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

Values of y and z may be configured according to needs. For example, x = 20, y = 24, and z = 28. That is, the bit width of the macro base station identity is 20 bits, the bit width of the small cell identity is 24 bits, and a width of global cell identities of a plurality of cells configured for the small cell is 28 bits.

For example, referring to FIG. 1, x = 20, y = 24, and z = 28. A macro base station identity of an intermediate device 1 is 0x00200, and a bit width of the macro base station identity is 20 bits. A small cell identity of a small cell 1 managed by the intermediate device 1 is 0x002000. It can be seen that, the first 20 bits in the small cell identity is the same as bits in the macro base station identity. Two cells are configured for the small cell 1, and global cell identities thereof are 0x0020000 and 0x0020001. The first 24 bits in the global cell identities are the same as bits in the small cell identity.

Optionally, z = 28, y < 28, and a maximum of 2^{28-y} cells are configured for each small cell.

The bit width of the small cell identity is less than 28 bits, and the bit width of the cell global identity is 28 bits. In this case, a plurality of cells may be configured for one small cell, a maximum quantity of configured cells depends on a difference between the bit width of the cell global identity and the bit width of the small cell, and a maximum of 2^{28-y} cells are configured for each small cell.

Referring to FIG. 3, FIG. 3 is a schematic flowchart 2 of an S1 message transmission method according to an aspect of the present disclosure. In this aspect of the present disclosure, the method includes the following steps.

S301. An intermediate device obtains a first S1 message including a small cell identity.

Specifically, a method for obtaining the first S1 message by the intermediate device may be: The intermediate device obtains a first S1 message generated on the intermediate device, or the intermediate device receives a first S1 message sent by a small cell in a small cell set managed by the intermediate device, or the intermediate device receives a first S1 message sent by another network device. The small cell identity is used to identify an identity of a small cell. A bit width of the small cell identity is greater than 20 bits.

S302. The intermediate device determines whether the first S1 message needs to be sent to a core network device.

Specifically, the intermediate device manages a small cell set. The small cell set includes a plurality of small cells. A method for determining, by the intermediate device, whether the first S1 message needs to be sent to the core network device is: determining, according to a message type of the first S1 message and a destination network device, whether the first S1 message needs to be sent to the core network device. For example, the first S1 message relates to a configuration process of the small cell in the small cell set managed by the intermediate device or a configuration of user equipment in a cell belonging to the small cell, and the first S1 message does not need to be sent to the core network device. If the first S1 message relates to a configuration process of the core network device, the first S1 message needs to be sent to the core network device.

S303. If a determining result is yes, the intermediate device converts the small cell identity to a macro base station identity, and generates a second S1 message including the macro base station identity.

Specifically, the macro base station identity is an identity of the intermediate device. A bit width of the macro base station identity is less than 20 bits. The intermediate device may generate the macro base station identity by capturing a preset length of bits from the small cell identity. For example, the bit width of the small cell identity is 28 bits, the bit width of the macro base station identity is 20 bits, and after capturing the first 20 bits in the small cell identity, the intermediate device generates the macro base station identity.

S304. The intermediate device sends the second S1 message to the core network device associated with the intermediate device.

Specifically, the intermediate device is uniquely associated with a core network device. The intermediate device sends the second S1 message including the macro base station identity to the core network device. The core network device completes a corresponding signaling procedure according to a message type of the second S1 message.

Optionally, the converting, by the intermediate device, the small cell identity to a macro base station identity includes:
capturing, by the intermediate device from the small cell identity, a preset length of bits as the macro base station identity.

Optionally, the determining, by the intermediate device, whether the first S1 message needs to be sent to a core network device includes:
in a process of performing a small cell handover procedure, if only one of a source small cell or a destination small cell belongs to the small cell set managed by the intermediate device,
determining, by the intermediate device, that a first S1 message that is sent in the small cell handover procedure by a small cell belonging to the small cell set needs to be sent to the core network device, where the first S1 message includes any one of a handover required handover required message, a handover request acknowledge handover request acknowledge message, or a handover notify handover notify message.

Specifically, UE performs the small cell handover procedure between the source small cell and the destination small cell, and only one of the source small cell or the destination small cell belongs to the small cell set managed by the intermediate device. The intermediate device needs to send, to the core network device, the first S1 message that is sent by the small cell belonging to the small cell set managed by the intermediate device.

For example, when discovering that signal strength is less than a preset strength threshold in a moving process of UE, the UE sends a measurement report to the source small cell, and the source small cell determines, according to the measurement report, whether the UE needs to be handed over. If the UE needs to be handed over, the source small cell sends a handover required message (an S1 message) to the intermediate device. The handover required message includes a small cell identity of the source small cell and a small cell identity of the destination small cell. Both bit widths of the small cell identities of the source small cell and of the destination small cell are greater than 20 bits. When receiving the handover required message, the intermediate device determines that both the source small cell and the destination small cell that are indicated by the handover required message belong to the small cell set managed by the intermediate device. The intermediate device does not need to notify the core network device of the small cell handover procedure performed currently. The intermediate device does not send, to the core network device, the first S1 message sent by the source small cell and by the destination small cell. The intermediate device executes a function of an MME, and completes the small cell handover procedure. If the source small cell and the destination small cell belong to small cell sets managed by different intermediate devices, the intermediate device needs to send, to the core network device, the first S1 message that is generated in the small cell handover process by the small cell in the small cell set managed by the intermediate device.

Optionally, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

Values of y and z may be configured according to needs. For example, x = 20, y = 24, and z = 28. That is, the bit width of the macro base station identity is 20 bits, the bit width of the small cell identity is 24 bits, and a width of global cell identities of a plurality of cells configured for the small cell is 28 bits.

For example, referring to FIG. 1, x = 20, y = 24, and z = 28. A macro base station identity of an intermediate device 1 is 0x00200, and a bit width of the macro base station identity is 20 bits. A small cell identity of a small cell 1 managed by the intermediate device 1 is 0x002000. It can be seen that, the first 20 bits in the small cell identity is the same as bits in the macro base station identity. Two cells are configured for the small cell 1, and global cell identities thereof are 0x0020000 and 0x0020001. The first 24 bits in the global cell identities are the same as bits in the small cell identity.

Optionally, z = 28, y < 28, and a maximum of 2^{28-y} cells are configured for each small cell.

The bit width of the small cell identity is less than 28 bits, and the bit width of the cell global identity is 28 bits. In this case, a plurality of cells may be configured for one small cell, a maximum quantity of configured cells depends on a difference between the bit width of the cell global identity and the bit width of the small cell, and a maximum of 2^{28-y} cells are configured for each small cell.

During implementation of this aspect of the present disclosure, the intermediate device converts, to the macro base station identity, the small cell identity included in the S1 message transmitted in an upstream direction, so that the S1 message obtained after the conversion is performed meets a format requirement of the core network device. In this way, there is no need to change the existing core network device, and upgrade costs are reduced.

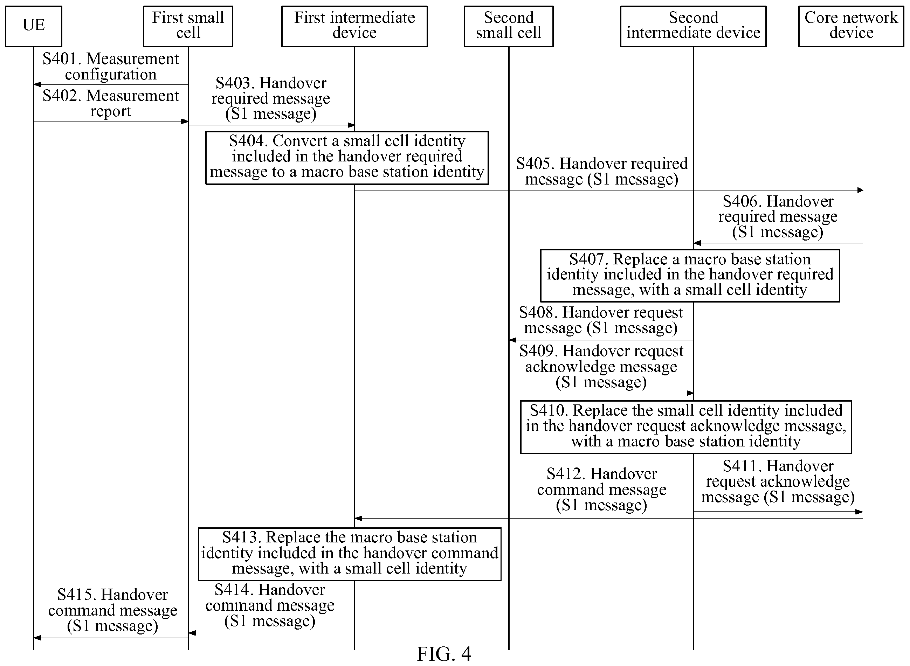

Referring to FIG. 4, FIG. 4 is a schematic flowchart 3 of an S1 message transmission method according to an aspect of the present disclosure. The method relates to a handover process of two small cells managed by different intermediate devices, and includes the following steps.

S401. A first small cell sends a measurement configuration to UE.

The first small cell is a small cell in a small cell set associated with a first intermediate device. A serving base station of the UE is the first small cell. The first small cell may perform measurement configuration on the UE by means of RRC connection reconfiguration.

S402. The UE returns a measurement report to the first small cell.

When detecting that a reporting condition of the measurement report is satisfied, the UE returns the measurement report to the first small cell. For example, when detecting that signal strength of the first small cell is less than a preset value, the UE returns the measurement report to the first small cell.

S403. The first small cell sends a handover required message to a first intermediate device.

The handover required message is an S1 message. The handover required message includes a small cell identity of the first small cell and a small cell identity of a second small cell.

S404. The first intermediate device converts a small cell identity in the handover required message to a macro base station identity.

The intermediate device determines that the first small cell and the second small cell do not belong to the small cell set managed by the intermediate device. That the intermediate device needs to convert the small cell identity in the handover required message is specifically: The first intermediate device maintains a mapping relationship between a small cell and an intermediate device, the first intermediate device converts the small cell identity of the first small cell in the handover required message to a macro base station identity of the first intermediate device, and converts the small cell identity of the second small cell in the handover required message to a macro base station identity of a second intermediate device.

S405. The first intermediate device sends the handover required message to a core network device.

The handover required message includes the macro base station identity of the first intermediate device and the macro base station identity of the second intermediate device.

S406. The core network device returns a handover request message to a second intermediate device.

The handover request message includes the macro base station identity of the second intermediate device.

S407. The second intermediate device converts a macro base station identity included in the handover request message to a small cell identity.

The second intermediate device confirms that the handover request message needs to be sent to the second small cell managed by the second intermediate device, and the macro base station identity of the second intermediate device that is included in the handover request message is converted to the small cell identity of the second small cell. The small cell identity of the second small cell is found according to a cell global identity included in the handover request message.

S408. The second intermediate device sends the handover request message to a second small cell.

The second intermediate device sends the handover request message including the small cell identity of the second small cell to the second small cell.

S409. The second small cell returns a handover request acknowledge message to the second intermediate device, where the handover request acknowledge message includes the small cell identity of the second small cell.

S410. The second intermediate device converts the small cell identity included in the handover request acknowledge message to a macro base station identity.

The second intermediate device converts the small cell identity of the second small cell that is included in the handover request acknowledge message to the macro base station identity of the second intermediate device.

S411. The second intermediate device sends the handover request acknowledge message to the core network device.

S412. The core network device sends a handover command message to the first intermediate device.

S413. The first intermediate device converts the macro base station identity in the handover command message to a small cell identity.

The first intermediate device may query, according to a cell global identity or a UE S1AP ID included in the handover command message, an associated small cell identity, and converts the macro base station identity included in the handover command message to the small cell identity.

S414. The first intermediate device returns the handover command message to the first small cell.

S415. The first small cell returns the handover command message to the UE.

It can be learned from the foregoing that, when a handover procedure is performed between the first small cell and the second small cell, and the first small cell and the second small cell belong to small cell sets managed by different intermediate devices, an intermediate device sends an S1 message generated in a handover process to the core network device.

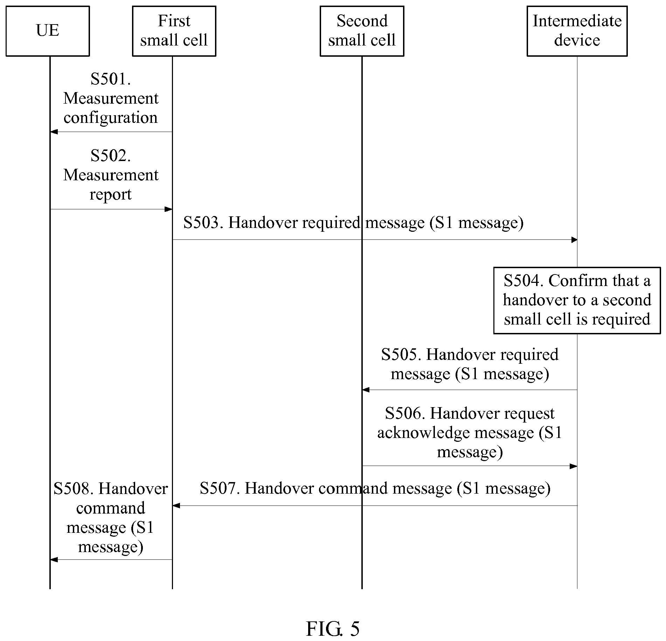

Referring to FIG. 5, FIG. 5 is a schematic flowchart of an S1 message transmission method according to an aspect of the present disclosure. The method relates to a handover process of two small cells managed by a same intermediate device. The method includes the following steps.

5501. A first small cell sends a measurement configuration to UE.

The first small cell is a source base station. A second small cell is a target base station. A serving base station of the UE is the first small cell. The first small cell monitors the UE, and performs measurement configuration on the UE by means of RRC connection reconfiguration.

S502. The UE returns a measurement report to the first small cell.

In a moving process, the UE discovers that a signal of the first small cell becomes weak, whereas a signal of the neighboring second small cell becomes strong. The UE sends, to the first small cell, an RRC reconfiguration complete message including the measurement report.

S503. The first small cell sends a handover required message to an intermediate device.

The first small cell receives the measurement report sent by the UE, and determines whether a handover condition is satisfied, for example, whether a current transmission resource meets a handover requirement of the UE. If the current transmission resource meets the handover requirement of the UE, the first small cell sends the handover required message to the intermediate device. The handover required message includes a small cell identity of the first small cell and a small cell identity of the second small cell.

S504. The intermediate device confirms that a handover to a second small cell is required.

The intermediate device finds that both the first small cell and the second small cell are small cells managed by the intermediate device, and there is no need to send the handover required message to a core network device. The intermediate device sends a handover request message to the second small cell.

S506. The second small cell returns a handover request acknowledge message to the intermediate device.

After receiving the handover request message, the second small cell determines whether a handover condition is satisfied. If the handover condition is satisfied, the second small cell returns the handover request acknowledge message to the intermediate device. If the handover condition is not satisfied, the second small cell returns a handover request failure message to the first small cell.

S507. The intermediate device sends a handover command message to the first small cell.

The intermediate device receives the handover request acknowledge message sent by the second small cell, and sends the handover command message to the first small cell.

S508. The first small cell sends the handover command message to the UE.

It can be learned from the foregoing that, when a handover procedure is performed between the first small cell and the second small cell, and the first small cell and the second small cell belong to a small cell set managed by the intermediate device, the intermediate device shields the handover procedure from the core network device, and do not send an S1 message generated in a handover process to the core network device. The intermediate device implements a function of the core network device and completes the small cell handover procedure inside the intermediate device.

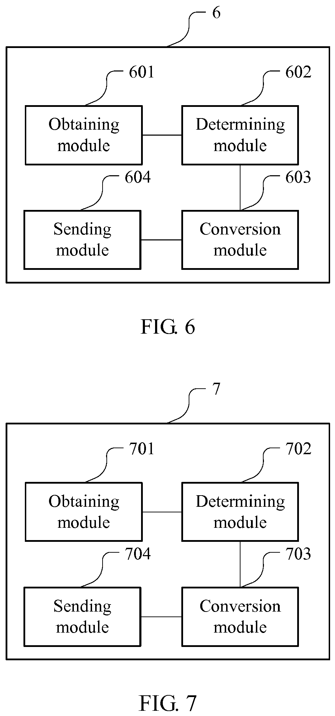

Referring to FIG. 6, FIG. 6 is a schematic structural diagram 1 of an intermediate device according to an aspect of the present disclosure. In this aspect of the present disclosure, the intermediate device is configured to implement the S1 message transmission method in FIG. 2. The intermediate device includes an obtaining module 601, a first determining module 602, a conversion module 603, and a sending module 604.

The obtaining module 601 is configured to obtain a first S1 message. The first S1 message includes a macro base station identity and a cell global identity, and the macro base station identity is an identity of the intermediate device.

The determining module 602 is configured to determine whether the first S1 message obtained by the obtaining module needs to be sent to a small cell in a small cell set managed by the intermediate device.

The conversion module 603 is configured to: if a determining result of the determining module is yes, obtain a small cell identity corresponding to the cell global identity, convert the macro base station identity to the small cell identity, and generate a second S1 message, where the second S1 message includes the small cell identity.

The sending module 604 is configured to send the second S1 message generated by the conversion module to a small cell corresponding to the small cell identity.

Optionally, the conversion module 603 is configured to:
convert the macro base station identity to the small cell identity by extending a custom field.

Optionally, the conversion module 603 is configured to:
convert the macro base station identity to the small cell identity according to a field of the macro base station identity and an idle field of an identity other than the macro base station identity.

Optionally, the obtaining module 601 is configured to:
receive a first S1 message sent by a core network device.

Optionally, the determining module 602 is configured to:
identify a message type of the first S1 message;
when the message type of the first S 1 message includes any one of a paging paging message, an evolved radio access bearer setup request E-RAB setup request message, or an initial context setup request initial context setup request message, determine whether user equipment UE corresponding to the first S1 message is located in a cell belonging to the small cell set; and
if yes, determine that the first S 1 message needs to be sent to the small cell in the small cell set.

Optionally, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

Optionally, z = 28, y < 28, and a maximum of 2^{28-y} cells are configured for each small cell.

Referring to FIG. 7, FIG. 7 is a schematic structural diagram 2 of an intermediate device according to an aspect of the present disclosure. In this aspect of the present disclosure, the intermediate device is configured to implement the S1 message transmission method in FIG. 3. The intermediate device includes an obtaining module 701, a first determining module 702, a conversion module 703, and a sending module 704.

The obtaining module 701 is configured to obtain a first S1 message, where the first S1 message includes a small cell identity.

The determining module 702 is configured to determine whether the first S1 message obtained by the obtaining module needs to be sent to a core network device.

The conversion module 703 is configured to: if a determining result of the determining module is yes, convert the small cell identity to a macro base station identity, and generate a second S1 message, where the second S1 message includes the macro base station identity, and the macro base station identity is an identity of the intermediate device.

The sending module 704 is configured to send the second S1 message generated by the conversion module to the core network device associated with the intermediate device.

Optionally, the conversion module 703 is configured to:
capture, from the small cell identity, a preset length of bits as the macro base station identity.

Optionally, the determining module 702 is configured to:
in a process of performing a small cell handover procedure, if only one of a source small cell or a destination small cell belongs to a small cell set managed by the intermediate device,
determine that a first S1 message that is sent in the small cell handover procedure by a small cell belonging to the small cell set needs to be sent to the core network device, where the first S1 message includes any one of a handover required handover required message, a handover request acknowledge handover request acknowledge message, or a handover notify handover notify message.

Optionally, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

Optionally, z = 28, y < 28, and a maximum of 2^{28-y} cells are configured for each small cell.

This aspect of the present disclosure and the method aspect of FIG. 2 are based on a same conception. Technical effects brought by this aspect of the present disclosure are also the same as those brought by the method aspect of FIG. 2. For a specific process, refer to descriptions in the method aspect 1 of FIG. 2. Details are not repeated herein any further.

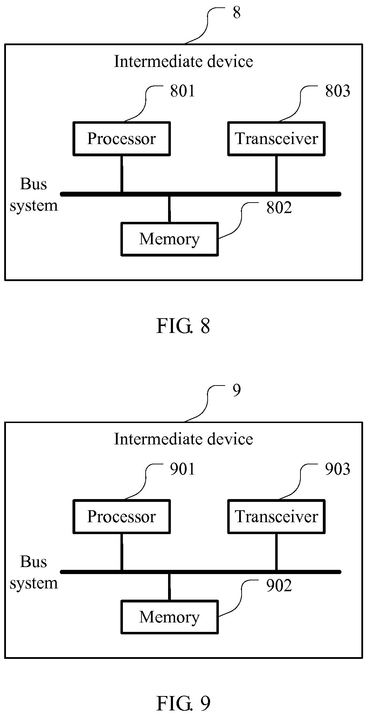

Referring to FIG. 8, FIG. 8 is another schematic structural diagram 3 of an intermediate device according to an aspect of the present disclosure. In this aspect of the present disclosure, the intermediate device 8 includes a processor 801, a memory 802, and a transceiver 803. The transceiver 803 is configured to send or receive data to or from an external device. There may be one or more processors 801 in the intermediate device 8. In some aspects of the present disclosure, the processor 801, the memory 802, and the transceiver 803 may be connected by using a bus system or in another manner. The intermediate device 8 may be configured to execute the method shown in FIG. 2. For meanings of terms and examples in this aspect, refer to the aspect corresponding to FIG. 2. Details are not repeated herein any further.

The memory 802 stores program code. The processor 801 is configured to invoke the program code stored in the memory 802, so as to perform the following operations:
obtaining a first S1 message, where the first S1 message includes a macro base station identity and a cell global identity, and the macro base station identity is an identity of the intermediate device;
determining whether the first S1 message needs to be sent to a small cell in a small cell set managed by the intermediate device;
if yes, obtaining a small cell identity corresponding to the cell global identity, converting the macro base station identity to the small cell identity, and generating a second S1 message, where the second S1 message includes the small cell identity; and
sending the second S1 message to a small cell corresponding to the small cell identity.

In some aspects of the present disclosure, the converting, by the processor 801, the macro base station identity to the small cell identity includes:
converting the macro base station identity to the small cell identity by extending a custom field.

In some aspects of the present disclosure, the converting, by the processor 801, the macro base station identity to the small cell identity includes:
converting the macro base station identity to the small cell identity according to a field of the macro base station identity and an idle field of an identity other than the macro base station identity.

In some aspects of the present disclosure, the obtaining, by the processor 801, a first S1 message includes:
receiving a first S1 message sent by a core network device.

In some aspects of the present disclosure, the determining, by the processor 801, whether the first S1 message needs to be sent to a small cell in a small cell set managed by the intermediate device includes:
identifying a message type of the first S1 message;
when the message type of the first S1 message includes any one of a paging paging message, an evolved radio access bearer setup request E-RAB setup request message, or an initial context setup request initial context setup request message, determining whether user equipment UE corresponding to the first S1 message is located in a cell belonging to the small cell set; and
if yes, determining that the first S1 message needs to be sent to the small cell in the small cell set.

In some aspects of the present disclosure, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

In some aspects of the present disclosure, z = 28, y < 28, and a maximum of 2^{28-y} cells are configured for each small cell.

Referring to FIG. 9, FIG. 9 is a schematic structural diagram 4 of an intermediate device according to an aspect of the present disclosure. In this aspect of the present disclosure, the intermediate device 9 includes a processor 901, a memory 902, and a transceiver 903. The transceiver 903 is configured to send or receive data to or from an external device. There may be one or more processors 901 in the intermediate device 9. In some aspects of the present disclosure, the processor 901, the memory 902, and the transceiver 903 may be connected by using a bus system or in another manner. The intermediate device 9 may be configured to execute the method shown in FIG. 3. For meanings of terms and examples in this aspect, refer to the aspect corresponding to FIG. 3. Details are not repeated herein any further.

The memory 902 stores program code. The processor 901 is configured to invoke the program code stored in the memory 902, so as to perform the following operations:
obtaining a first S1 message, where the first S1 message includes a small cell identity;
determining whether the first S1 message needs to be sent to a core network device;
if yes, converting the small cell identity to a macro base station identity, and generating a second S1 message, where the second S1 message includes the macro base station identity, and the macro base station identity is an identity of the intermediate device; and
sending the second S1 message to the core network device associated with the intermediate device.

In some aspects of the present disclosure, the converting, by the processor 901, the small cell identity to a macro base station identity includes:
capturing, from the small cell identity, a preset length of bits as the macro base station identity.

In some aspects of the present disclosure, the determining, by the processor 901, whether the first S1 message needs to be sent to a core network device includes:
in a process of performing a small cell handover procedure, if only one of a source small cell or a destination small cell belongs to a small cell set managed by the intermediate device,
determining that a first S1 message that is sent in the small cell handover procedure by a small cell belonging to the small cell set needs to be sent to the core network device, where the first S1 message includes any one of a handover required handover required message, a handover request acknowledge handover request acknowledge message, or a handover notify handover notify message.

In some aspects of the present disclosure, the small cell set includes a maximum of 2^{(*y*-*x*)} small cells, and a maximum of 2^{(*z-y*)} cells are configured for each small cell in the small cell set, where x is a bit width of the macro base station identity, y is a bit width of the small cell identity, z is a bit width of the cell global identity, x = 20, y ≥ 20, z ≥ y ≥ x, and x, y, and z are all integers.

In some aspects of the present disclosure, z = 28, y < 28, and a maximum of 2^{28-y} cells are configured for each small cell.

A person of ordinary skill in the art may understand that all or some of the procedures of the methods in the aspects may be implemented by a computer program instructing relevant hardware. The program may be stored in a computer readable storage medium. When the program runs, the procedures of the methods in the aspects are performed. The foregoing storage medium may include: a magnetic disk, an optical disc, a read-only memory (Read-Only Memory, ROM), a random access memory (Random Access Memory, RAM), or the like.

What is disclosed above is merely examples of aspects of the present disclosure, and certainly is not intended to limit the protection scope of the present disclosure which is defined by the appended claims.

## Claims

1. An S1 message transmission method performed by an intermediate device, wherein the intermediate device is configured between a core network device and a small cell set, comprising:
obtaining (S201), by the intermediate device, a first S1 message, wherein the first S1 message comprises a macro base station identity and a cell global identity, and the macro base station identity is an identity of the intermediate device;
determining (S202), by the intermediate device, whether the first S1 message needs to be sent to a small cell in the small cell set managed by the intermediate device;
if the first S1 message needs to be sent to the small cell in the small cell set managed by the intermediate device, obtaining (S203), by the intermediate device, a small cell identity corresponding to the cell global identity, converting the macro base station identity to the small cell identity, and generating a second S1 message, wherein the second S1 message comprises the small cell identity; and
sending (S204), by the intermediate device, the second S1 message to a small cell corresponding to the small cell identity;
wherein, a bit width of the macro base station identity is less than or equal to 20 bits and a bit width of the small cell identity is greater than 20 bits;
wherein the obtaining, by an intermediate device, the first S1 message comprises:
receiving, by the intermediate device, the first S1 message sent by a core network device;
wherein the converting the macro base station identity to the small cell identity comprises one of:
converting the macro base station identity to the small cell identity according to a field of the macro base station identity and an idle field of an identity other than the macro base station identity, wherein the idle field has a bit width equal to the difference between the bit width of the macro base station identity and the bit width of the small cell identity; and
converting the macro base station identity to the small cell identity by extending a custom field of the macro base station identity so that the resulting bit width of the macro base station identity is equal to the bit width of the small cell identity.

2. The method according to claim 1, wherein the determining, by the intermediate device, whether the first S1 message needs to be sent to a small cell in a small cell set managed by the intermediate device comprises:
identifying a message type of the first S1 message;
when the message type of the first S1 message comprises any one of a paging message, an evolved radio access bearer setup request message, or an initial context setup request message, determining, by the intermediate device, whether user equipment, UE, corresponding to the first S1 message is located in a cell belonging to the small cell set; and
if the UE corresponding to the first S1 message is located in a cell belonging to the small cell set, determining, by the intermediate device, that the first S1 message needs to be sent to the small cell in the small cell set.

3. An intermediate device, wherein the intermediate device is configured between a core network device and a small cell set, comprising:
an obtaining module (601), configured to obtain a first S1 message, wherein the first S1 message comprises a macro base station identity and a cell global identity, and the macro base station identity is an identity of the intermediate device;
a determining module (602), configured to determine whether the first S1 message obtained by the obtaining module needs to be sent to a small cell in the small cell set managed by the intermediate device;
a conversion module (603), configured to: if a determining result of the determining module is yes, obtain a small cell identity corresponding to the cell global identity, convert the macro base station identity to the small cell identity, and generate a second S1 message, wherein the second S1 message comprises the small cell identity; and
a sending module (604), configured to send the second S1 message generated by the conversion module to a small cell corresponding to the small cell identity;
wherein, a bit width of the macro base station identity is less than or equal to 20 bits and a bit width of the small cell identity is greater than 20 bits;
wherein the obtaining module is configured to:
receive the first S1 message sent by a core network device;
wherein the conversion module is configured to:
convert the macro base station identity to the small cell identity by one of:
extending a custom field of the macro base station identity so that the resulting bit width of the macro base station identity is equal to the bit width of the small cell identity; and
using a field of the macro base station identity and an idle field of an identity other than the macro base station identity, wherein the idle field has a bit width equal to the difference between the bit width of the macro base station identity and the bit width of the small cell identity.

4. The intermediate device according to claim 3, wherein the determining module is configured to:
identify a message type of the first S1 message;
when the message type of the first S1 message comprises any one of a paging message, an evolved radio access bearer setup request E-RAB setup request message, or an initial context setup request initial context setup request message, determine whether user equipment, UE, corresponding to the first S1 message is located in a cell belonging to the small cell set; and
if the UE corresponding to the first S1 message is located in a cell belonging to the small cell set, determine that the first S1 message needs to be sent to the small cell in the small cell set.

5. The intermediate device of claim 3 or claim 4, further comprising: one or more processors (801), a memory (802), a bus system and a transceiver (803) wherein the one or more processors, the memory, and the transceiver are connected by using the bus system.

6. A computer readable storage medium storing one or more programs, wherein the one or more programs comprise an instruction, and when being executed by an intermediate device, the instruction enables the intermediate device to execute the method according to claim 1 or claim 2.

7. A computer program which makes a computer to execute the method of claim 1 or claim 2.

## Patentansprüche

1. S1-Nachrichtenübertragungsverfahren, das durch eine Zwischenvorrichtung durchgeführt wird, wobei die Zwischenvorrichtung zwischen einer Kernnetzwerkvorrichtung und einer Gruppe von kleinen Zellen konfiguriert ist, umfassend Erlangen (S201), durch die Zwischenvorrichtung, einer ersten S1-Nachricht, wobei die erste S1-Nachricht eine Identität einer Makro-Basisstation und eine globale Zellidentität umfasst und die Identität der Makro-Basisstation eine Identität der Zwischenvorrichtung ist;
Bestimmen (S202), durch die Zwischenvorrichtung, ob die erste S1-Nachricht an eine kleine Zelle in der Gruppe von kleinen Zellen, die durch die Zwischenvorrichtung verwaltet wird, gesendet werden muss;
wenn die erste S1-Nachricht an die kleine Zelle in der Gruppe von kleinen Zellen, die durch die Zwischenvorrichtung verwaltet wird, gesendet werden muss, Erlangen (S203), durch die Zwischenvorrichtung, einer Identität der kleinen Zelle, die der globalen Zellidentität entspricht, Umwandeln der Identität der Makro-Basisstation in die Identität der kleinen Zelle und Generieren einer zweiten S1-Nachricht, wobei die zweite S1-Nachricht die Identität der kleinen Zelle umfasst; und
Senden (204), durch die zwischen Vorrichtung, der zweiten S1-Nachricht an eine kleine Zelle, die der Identität der kleinen Zelle entspricht;
wobei eine Bitbreite der Identität der Makro-Basisstation kleiner gleich 20 Bit ist und eine Bitbreite der Identität der kleinen Zelle größer als 20 Bit ist;
wobei das Erlangen, durch eine Zwischenvorrichtung, der ersten S1-Nachricht Folgendes umfasst:
Empfangen, durch die Zwischenvorrichtung, der ersten S1-Nachricht, die durch eine Kernnetzwerkvorrichtung gesendet wurde;
wobei das Umwandeln der Identität der Makro-Basisstation in die Identität der kleinen Zelle eines der Folgenden umfasst:
Umwandeln der Identität der Makro-Basisstation in die Identität der kleinen Zelle gemäß einem Feld der Identität der Makro-Basisstation und einem leeren Feld einer anderen Identität als der Identität der Makro-Basis, wobei das leere Feld eine Bitbreite aufweist, die der Differenz zwischen der Bitbereite der Identität der Makrobasis und der Bitbreite der Identität der kleinen Zelle entspricht; und
Umwandeln der Identität der Makro-Basisstation in die Identität der kleinen Zelle durch Erweitern eines individuellen Felds der Identität der Makro-Basisstation, sodass die resultierende Bitbreite der Identität der Makro-Basisstation der Bitbreite der Identität der kleinen Zelle entspricht.

2. Verfahren nach Anspruch 1, wobei das Bestimmen, durch die Zwischenvorrichtung, ob die S1-Nachricht an eine kleine Zelle in einer Gruppe von kleinen Zellen, die durch die Zwischenvorrichtung verwaltet wird, gesendet werden muss, Folgendes umfasst:
Identifizieren eines Nachrichtentyps der ersten S1-Nachricht;
wenn der Nachrichtentyp der S1-Nachricht eine beliebige von einer Funkrufnachricht, einer evolved-Funkzugangsträger-Einrichtungsanforderungsnachricht oder einer Ursprungskontext-Einrichtungsanforderungsnachricht umfasst, Bestimmen, durch die Zwischenvorrichtung, ob sich eine Benutzereinrichtung (UE), die der ersten S1-Nachricht entspricht, in einer Zelle befindet, die zu der Gruppe von kleinen Zellen gehört; und
wenn sich die UE, die der ersten S1-Nachricht entspricht, in einer Zelle befindet, die zu der Gruppe von kleinen Zellen gehört, Bestimmen, durch die Zwischenvorrichtung, dass die S1-Nachricht an die kleine Zelle in der Gruppe von kleinen Zellen gesendet werden muss.

3. Zwischenvorrichtung, wobei die Zwischenvorrichtung zwischen einer Kernnetzwerkvorrichtung und einer Gruppe von kleinen Zellen konfiguriert ist
ein Erlangungsmodul (601), das konfiguriert ist zum Erlangen einer ersten S1-Nachricht, wobei die erste S1-Nachricht eine Identität einer Makro-Basisstation und eine globale Zellidentität umfasst und die Identität der Makro-Basisstation eine Identität der Zwischenvorrichtung ist;
ein Bestimmungsmodul (602), das konfiguriert ist zum Bestimmen, ob die erste S1-Nachricht, dir durch das Erlangungsmodul erlangt wurde, an eine kleine Zelle in der Gruppe von kleinen Zellen, die durch die Zwischenvorrichtung verwaltet wird, gesendet werden muss;
ein Umwandlungsmodul (603), das konfiguriert ist zum: wenn ein Bestimmungsergebnis des Bestimmungsmoduls ja lautet, Erlangen einer Identität der kleinen Zelle, die der globalen Zellidentität entspricht, Umwandeln der Identität der Makro-Basisstation in die Identität der kleinen Zelle und Generieren einer zweiten S1-Nachricht, wobei die zweite S1-Nachricht die Identität der kleinen Zelle umfasst; und
ein Sendemodul (604), das konfiguriert ist zum Senden der zweiten S1-Nachricht, die durch das Umwandlungsmodul generiert wurde, an eine kleine Zelle, die der Identität der kleinen Zelle entspricht;
wobei eine Bitbreite der Identität der Makro-Basisstation kleiner gleich 20 Bit ist und eine Bitbreite der Identität der kleinen Zelle größer als 20 Bit ist;
wobei das Erlangungsmodul zu Folgendem konfiguriert ist:
Empfangen der ersten S1-Nachricht, die durch eine Kernnetzwerkvorrichtung gesendet wurde;
wobei das Umwandlungsmodul zu Folgendem konfiguriert ist:
Umwandeln der Identität der Makro-Basisstation in die Identität der kleinen Zelle durch eines der Folgenden:
Erweitern eines individuellen Felds der Identität der Makro-Basisstation, sodass die resultierende Bitbreite der Identität der Makro-Basisstation der Bitbreite der Identität der kleinen Zelle entspricht; und
Verwenden eines Felds der Identität der Makro-Basisstation und eines leeren Felds einer anderen Identität als der Identität der Makro-Basis, wobei das leere Feld eine Bitbreite aufweist, die der Differenz zwischen der Bitbereite der Identität der Makrobasis und der Bitbreite der Identität der kleinen Zelle entspricht.

4. Zwischenvorrichtung nach Anspruch 3, wobei das Bestimmungsmodul zu Folgendem konfiguriert ist:
Identifizieren eines Nachrichtentyps der ersten S1-Nachricht;
wenn der Nachrichtentyp der S1-Nachricht eine beliebige von einer Funkrufnachricht, einer evolved-Funkzugangsträger-Einrichtungsanforderungsnachricht (E-RAB-Einrichtungsanforderungsnachricht) oder einer Ursprungskontext-Einrichtungsanforderungsnachricht umfasst, Bestimmen, ob sich eine Benutzereinrichtung (UE), die der ersten S1-Nachricht entspricht, in einer Zelle befindet, die zu der Gruppe von kleinen Zellen gehört; und
wenn sich die UE, die der ersten S1-Nachricht entspricht, in einer Zelle befindet, die zu der Gruppe von kleinen Zellen gehört, Bestimmen, dass die S1-Nachricht an die kleine Zelle in der Gruppe von kleinen Zellen gesendet werden muss.

5. Zwischenvorrichtung nach Anspruch 3 oder Anspruch 4, ferner umfassend:
einen oder mehrere Prozessoren (801), einen Speicher (802), ein Bussystem und einen Sendeempfänger (803), wobei der eine oder die mehreren Prozessoren, der Speicher und der Sendeempfänger unter Verwendung des Bussystems verbunden sind.

6. Computerlesbares Speichermedium, das ein oder mehrere Programme speichert, wobei das eine oder die mehreren Programme eine Anweisung umfassen und bei Ausführung durch eine Zwischenvorrichtung die Anweisung der Zwischenvorrichtung ermöglicht, das Verfahren nach Anspruch 1 oder Anspruch 2 auszuführen.

7. Computerprogramm, das einen Computer dazu bringt, das Verfahren nach Anspruch 1 oder Anspruch 2 auszuführen.

## Revendications

1. Procédé de transmission de message S1 réalisé par un dispositif intermédiaire, dans lequel le dispositif intermédiaire est configuré entre un dispositif de réseau central et un ensemble de petites cellules, comprenant :
l'obtention (S201), par le dispositif intermédiaire, d'un premier message S1, dans lequel le premier message S1 comprend une identité de macro-station de base et une identité globale de cellule, et l'identité de macro-station de base est une identité du dispositif intermédiaire ;
le fait de déterminer (S202), par le dispositif intermédiaire, si le premier message S1 nécessite d'être envoyé à une petite cellule dans l'ensemble de petites cellules géré par le dispositif intermédiaire ;
si le premier message S1 nécessite d'être envoyé à une petite cellule dans l'ensemble de petites cellules géré par le dispositif intermédiaire, l'obtention (S203), par le dispositif intermédiaire, d'une identité de petite cellule correspondant à l'identité globale de cellule, la conversion de l'identité de macro-station de base en l'identité de petite cellule, et la génération d'un deuxième message S1, dans lequel le deuxième message S1 comprend l'identité de petite cellule ; et
l'envoi (S204), par le dispositif intermédiaire, du deuxième message S1 à une petite cellule correspondant à l'identité de petite cellule ;
dans lequel une largeur de bits de l'identité de macro-station de base est inférieure ou égale à 20 bits et une largeur de bits de l'identité de petite cellule est supérieure à 20 bits ;
dans lequel l'obtention, par le dispositif intermédiaire, du premier message S1 comprend :
la réception, par le dispositif intermédiaire, du premier message S1 envoyé par un dispositif de réseau central ;
dans lequel la conversion de l'identité de macro-station de base en l'identité de petite cellule comprend une parmi :
la conversion de l'identité de macro-station de base en l'identité de petite cellule en fonction d'un champ de l'identité de macro-station de base et d'un champ inactif d'une identité autre que l'identité de macro-station de base,
dans lequel le champ inactif a une largeur de bits égale à la différence entre la largeur de bits de l'identité de macro-station de base et la largeur de bits de l'identité de petite cellule ; et
la conversion de l'identité de macro-station de base en l'identité de petite cellule en étendant un champ personnalisé de l'identité de macro-station de base de manière que la largeur de bits résultante de l'identité de macro-station de base soit égale à la largeur de bits de l'identité de petite cellule.

2. Procédé selon la revendication 1, dans lequel le fait de déterminer, par le dispositif intermédiaire, si le premier message S1 nécessite d'être envoyé à une petite cellule dans un ensemble de petites cellules géré par le dispositif intermédiaire comprend :
l'identification d'un type de message du premier message S1 ;
quand le type de message du premier message S1 comprend l'un quelconque parmi un message de radiomessagerie, un message de demande de configuration de support d'accès radio évolué ou un message de demande de configuration de contexte initial, le fait de déterminer, par le dispositif intermédiaire, si un équipement utilisateur, UE, correspondant au premier message S1 est situé dans une cellule appartenant à l'ensemble de petites cellules ; et
si l'UE correspondant au premier message S1 est situé dans une cellule appartenant à l'ensemble de petites cellules, la détermination, par le dispositif intermédiaire, que le premier message S1 nécessite d'être envoyé à une petite cellule dans l'ensemble de petites cellules.

3. Dispositif intermédiaire, dans lequel le dispositif intermédiaire est configuré entre un dispositif de réseau central et un ensemble de petites cellules, comprenant :
un module d'obtention (601) configuré pour obtenir un premier message S1, dans lequel le premier message S1 comprend une identité de macro-station de base et une identité globale de cellule, et l'identité de macro-station de base est une identité du dispositif intermédiaire ;
un module détermination (602) configuré pour déterminer si le premier message S1 obtenu par le module d'obtention nécessite d'être envoyé à une petite cellule dans l'ensemble de petites cellules géré par le dispositif intermédiaire ;
un module de conversion (603) configuré pour : si un résultat de détermination du module de détermination est oui, obtenir une identité de petite cellule correspondant à l'identité globale de cellule, convertir l'identité de macro-station de base en l'identité de petite cellule, et générer un deuxième message S1, dans lequel le deuxième message S1 comprend l'identité de petite cellule ; et
un module d'envoi (604) configuré pour envoyer le deuxième message S1 généré par le module de conversion à une petite cellule correspondant à l'identité de petite cellule ;
dans lequel une largeur de bits de l'identité de macro-station de base est inférieure ou égale à 20 bits et une largeur de bits de l'identité de petite cellule est supérieure à 20 bits ;
dans lequel le module d'obtention est configuré pour :
recevoir le premier message S1 envoyé par un dispositif de réseau central ;
dans lequel le module d'obtention est configuré pour :
convertir l'identité de macro-station de base en l'identité de petite cellule par une parmi :
l'extension d'un champ personnalisé de l'identité de macro-station de base de manière que la largeur de bits résultante de l'identité de macro-station de base soit égale à la largeur de bits de l'identité de petite cellule ; et
l'utilisation d'un champ de l'identité de macro-station de base et d'un champ inactif d'une identité autre que l'identité de macro-station de base, dans lequel le champ inactif a une largeur de bits égale à la différence entre la largeur de bits de l'identité de macro-station de base et la largeur de bits de l'identité de petite cellule.

4. Dispositif intermédiaire selon la revendication 3, dans lequel le dispositif de détermination est configuré pour :
identifier un type de message du premier message S1;
quand le type de message du premier message S1 comprend l'un quelconque parmi un message de radiomessagerie, un message de demande de configuration E-RAB de demande de configuration de support d'accès radio évolué ou un message de demande de configuration de contexte initial de demande de configuration de contexte initial, déterminer si un équipement utilisateur, UE, correspondant au premier message S1 est situé dans une cellule appartenant à l'ensemble de petites cellules ; et
si l'UE correspondant au premier message S1 est situé dans une cellule appartenant à l'ensemble de petites cellules,
déterminer que le premier message S1 nécessite d'être envoyé à une petite cellule dans l'ensemble de petites cellules.

5. Dispositif intermédiaire selon la revendication 3 ou la revendication 4, comprenant en outre :
un ou plusieurs processeurs (801), une mémoire (802), un système de bus et un émetteur-récepteur (803), dans lequel les un ou plusieurs processeurs, la mémoire et l'émetteur-récepteur sont connectés en utilisant le système de bus.

6. Support de stockage lisible par ordinateur stockant un ou plusieurs programmes, dans lequel les un ou plusieurs programmes comprennent une instruction et, quand elle est exécutée par un dispositif intermédiaire, l'instruction permet au dispositif intermédiaire d'exécuter le procédé selon la revendication 1 ou la revendication 2.

7. Programme informatique qui fait exécuter à un ordinateur le procédé selon la revendication 1 ou la revendication 2.
